# EUROPEAN PATENT APPLICATION

(11) **EP 1 139 679 A1**
(43) Date of publication of application: **04.10.2001**
(21) Application number: 00302738.0
(22) Date of filing: 31.03.2000
(51) Int. Cl.: H04Q 7/32

(54) **Mobile telephone with pager mode**

(71) Applicant: BRITISH TELECOMMUNICATIONS public limited company, London EC1A 7AJ (GB)
(72) Inventor: The designation of the inventor has not yet been filed
(74) Representative: Semos, Robert Ernest Vickers

(57) **Abstract**

A mobile telephone is arranged to detect when its battery voltage has fallen such that only the lowest segment of the four segment battery charge level bar of its LCD display is showing, and, in response, to transmit a "Pager Mode" message to a predetermined network destination number, and then to disable its transmit function. An audio signal is generated to alert the user, and a warning message is displayed, e.g. Battery Low, Pager Mode. Pager Mode is a selectable option via the telephone's menu. The mobile network, upon receipt of such a "Pager Mode" message, sets a "Pager Mode" flag in the user's profile.

For an originating call the profile is accessed in the normal manner, and, if that flag is set, the network sends a "Receive Only - Leave Message" announcement to the caller.

## Description

The present invention relates to communications methods and apparatus, and particularly, but not exclusively, to methods of operating mobile communications networks, and to mobile telephones for use with mobile communications networks.

According to a first aspect of the present invention there is provided a method of operating a communications network having a user profile store, the method comprising the steps of:
retrieving a dialled destination number from signalling data of a call from a calling user to a called user;
accessing the user profile store in accordance with that retrieved dialled destination number to find a corresponding user profile;
ascertaining whether a delivery mode field of a user profile so found contains an indication corresponding to receive only mode; and if so
sending to the calling user an indication that the called user is currently in receive only mode.

This aspect of the present invention is particularly beneficial in mobile telephony and provides an advantage that a caller is immediately alerted to the situation that the called user's mobile telephone has been switched from full duplex operation, i.e. both receive and transmit functionality, to simplex functionality, i.e. receive mode only, thus enabling a calling user to be confident that in the event of receipt of such a network announcement the called user's mobile was not switched off, either by intention or due to low battery charge, and the called user would be able to receive messages. If the called user's mobile had switched itself off because of low battery voltage, the called user would be completely ignorant of any incoming messages, voice or text, until he had replaced or recharged the battery, and then entered the Read Messages or Missed Calls functions of the menu, or had accessed a Voicemail service to check whether any messages had been left. Furthermore, the calling user would receive a standard announcement to the effect that the call could not be connected, and this could lead to frustration that the calling user could not get a message to the called user. In the case where the called user had set Divert to Voicemail in the event that an incoming call could not be connected, the calling user will still not know when, and if, the called user will next retrieve messages from the Voicemail service.

There may be included the further steps of retrieving a calling line identity from the signalling data, ascertaining whether the retrieved calling line identity matches an entry in a permitted connections field of the called user's user profile, and if there is a matching entry proceeding with the call, else not proceeding with the call.

There may be included the step of responding to receipt of message data from that calling user by sending a text form message to the called user.

When the received message data is in the form of a spoken message, there may be included the step of converting the received message data into text form.

The received message data may be already in text form.

There may be included the steps of ascertaining whether the called user's profile contains at least one other service destination address, and if so sending to the calling user an invitation for the calling user to select one or more of said at least one other service destination address for additional delivery of said text form message.

There may be included the further step of also sending to the calling user a command for causing a telephone associated with the calling user to enter a mode for writing messages.

According to a second aspect of the present invention there is provided a telephone comprising control means arranged to respond to a predetermined condition by transmitting via a transmit function of the telephone a message having a predetermined destination address and a predetermined message content.

The control means may be arranged to respond to a user provided command, constituting said predetermined condition.

The control means may be arranged to receive the user provided command in the form of a selection from a menu.

When the telephone is battery powered, it may have battery voltage sensing means arranged to generate a predetermined output when the battery voltage falls to a predetermined level, and in this case the generation of said predetermined output constitutes said predetermined condition.

The control means may be further arranged to provide an audio output upon activation of the disabling means.

The control means may be further arranged to provide a predetermined display on a screen of the telephone indicative of the predetermined condition.

The control means may be further arranged to activate, upon completion of that transmission, means for selectively disabling the transmit function.

The control means may be further arranged to override said means for selectively disabling the transmit function for the purpose of allowing transmission of responses to interrogation signals from a communications network.

According to a third aspect of the present invention there is provided a communications network having a user profile store, and arranged:
to retrieve a dialled destination number from signalling data of a call from a calling user to a called user;
to access the user profile store in accordance with that retrieved dialled destination number to find a corresponding user profile;
to ascertain whether a delivery mode field of a user profile so found contains an indication corresponding to receive only mode; and if so
to send to the calling user an indication that the called user is currently in receive only mode.

Communications networks in accordance with this third aspect may be arranged to retrieve a calling line identity from the signalling data, to ascertain whether the retrieved calling line identity matches an entry in a permitted connections field of the called user's user profile, and if there is a matching entry to proceed with the call, else not to proceed with the call.

Preferably, such communications networks are arranged to respond to receipt of message data from that calling user by sending a text form message to the called user.

More preferably, such communications networks are arranged to respond to receipt of said message data in the form of a spoken message, and to convert the spoken message into text form.

Such communications networks may be arranged to ascertain whether the called user's profile contains at least one other service destination address, and if so to send to the calling user an invitation for the calling user to select one or more of said at least one other service destination address for additional delivery of said text form message.

Such communications networks may be arranged to send to the calling user a command for causing a telephone associated with the calling user to enter a mode for writing messages.

Specific embodiments of a mobile communications network and of a mobile telephone for use with that network will now be described by way of example with reference to the drawings in which:
Figure 1 is a schematic diagram of a mobile telephone having a pager mode;
Figure 2 is a schematic diagram of a mobile communications network for use with the mobile telephone of Figure 1; and
Figure 3 is a schematic diagram of some of the fields of a user profile used in the network of Figure 2.

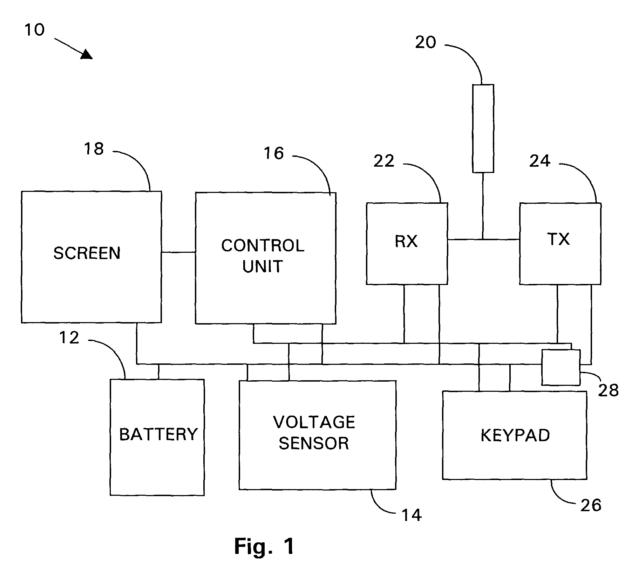

In Figure 1 there is shown a mobile telephone 10 having a battery 12 and standard battery voltage sensing circuit 14 providing an output signal to a control unit 16 which provides drive signals to an LCD screen 18. Depending upon the output signal of the voltage sensing circuit 14, the control unit 16 commands the display of a four segment battery voltage indicator, commonly known in the art as a battery charge level bar. If the battery is fully charged then all four segments show, and as the battery discharges then the segments are "extinguished", one by one, starting at the fourth (top) segment, until low battery voltage is reached and only the first segment is shown, and finally when the battery voltage becomes too low to power the mobile telephone 10 the first segment is extinguished and the mobile telephone switches itself off.

The mobile telephone 10 also has other conventional components, including an aerial 20, a receive circuit 22 a transmit circuit 24, and a keypad 26.

The control unit 16 is arranged to do four additional things when it ceases to display the second segment of the bar, and only the lowest segment is displayed.

First, it generates for display on the screen 18 a preset message, "Battery Low, Pager Only".

Secondly, it activates a tone alert function of the mobile telephone 10 to alert the user by a unique alert (audio warning signal), which might be a specific tune not used or selected for call alerting, or a combination of beeps.

Thirdly, it transmits a "Pager Only" message to the GSM network to inform it that that mobile telephone 10 has switched to Pager Only mode. The message contains the telephone number of the mobile telephone as its source address (Calling Line Identity, CLI), and a predetermined address of the GSM network as its destination address, and its message content is a unique code representative of the Pager Only mode.

Fourthly, after it has transmitted that message, it disables the transmit circuit 24 by means of a control signal applied to the gate of a FET switch 28 disposed in series with the battery power line to the transmit circuit 24. In order that the standard response messages which the mobile telephone 10 generates and transmits in response to receipt of standard GSM interrogation signal from the network can still be transmitted, even though the mobile telephone 10 has switched to Pager Only mode, the control unit 16 is arranged to respond to receipt of each standard GSM interrogation signal an override signal which disables the effect of the control signal applied to the gate of the FET switch, and thus allows the mobile telephone 10 to send a respective standard response message, thus enabling the network to continue to be able to determine the location of the mobile telephone in the usual manner.

The control unit 16 is also arranged to do these four additional things in response to selection by the user of Pager Only mode from a menu. The manner of controlling the functions and operation of the mobile telephone 10 by means of a menu system is well known and need not be described further. In one variant the user activation of Pager Only mode is via a sequence of key presses, and in another variant the tone alert is omitted.

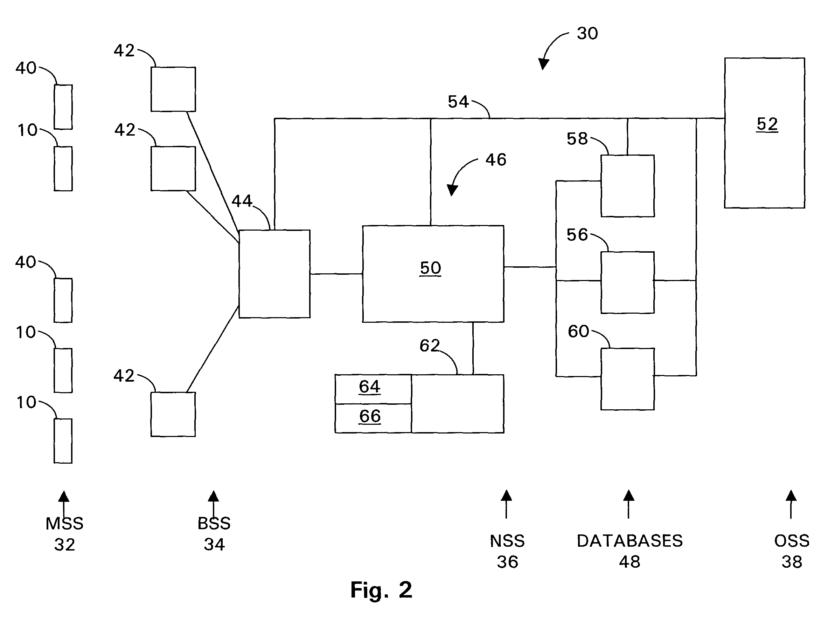

In Figure 2, there is shown a GSM network 30 constituted by four subsystems, namely, Mobile Station Subsystem (MSS) 32, Base Station Subsystem (BSS) 34, Network Switching Subsystem (NSS) 36 and Operation Subsystem (OSS) 38. Global communications is achieved by interconnection of spaced apart national-based GSM networks operated by different respective network operators.

The GSM system is well known to the skilled person in the art and is described below only in high-level detail. However, should any reader require more information, he will find a number of publications on GSM, particularly, "The GSM System for Mobile Communications" by M. Mouly and M.-B. Pautet, ISBN 2-9507190-0-7, published 1992 by the authors thereof.

The MSS 32 comprises a plurality of the mobile telephones 10, and, until 100 penetration of the mobile telephone market by mobile telephones 10, there will be a plurality of conventional mobile telephones 40.

The BSS 34 comprises a plurality of base transceiver stations 42 and a plurality of base station controllers 44, only one which is shown. Each of the base station controllers 44 is connected to the NSS 36 and to a plurality of the base transceiver stations 42.

The NSS 36 comprises an exchange system 46 and user and terminal equipment databases 48. The exchange system 46 comprises a plurality of interconnected mobile services switching centres 50, only one which is shown, which are connected to the user and terminal equipment databases 48.

The OSS 38 comprises an operation and maintenance centre 52 which is connected, via a data network 54, to the BSS 34 and the NSS 36.

The user and terminal equipment databases 48 comprise a home location register (HLR) 56, a visitor location register (VLR) 58 and an equipment identity register 60.

A Voicemail system 62 is connected to the exchange system 46 and includes an interactive voice response facility (IVR) 64 capable of generating selected announcements, and a speech to text converter 66.

The HLR 56 is a database which stores user profiles, which contain user-specific information relevant to the provision of telecommunications services and identifying whether a given teleservice or bearer service can be provided for a user, and also user preferences.

The VLR 58 temporarily stores subscription data for users who are normally registered with a different home GSM network and who are currently registered with the GSM network 30, i.e. under a roaming arrangement.

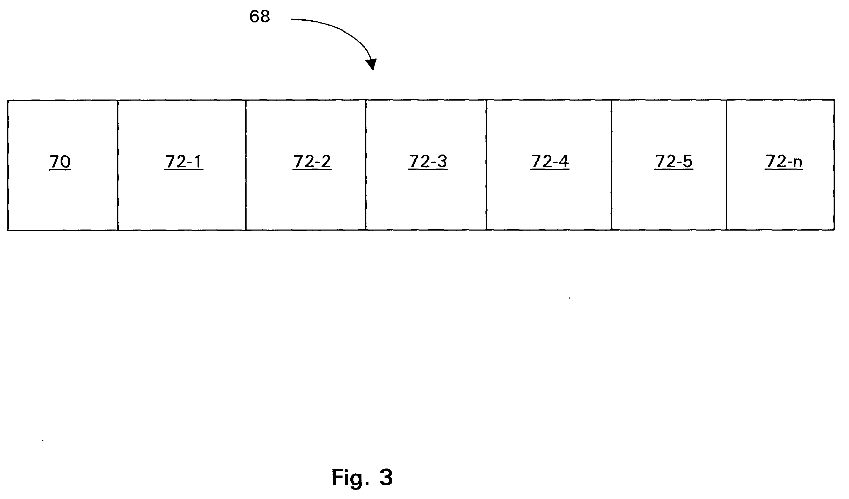

The user profiles 68 (Figure 3) include a Pager Mode field 70 containing a flag which, when set, is indicative of the associated user's mobile telephone 10 being in Pager Only mode. For those users who do not yet use a mobile telephone 10, their Pager Mode flags will be permanently in their reset state. In variants, the user profiles are of two types, namely the user profile 68 which has a Pager Mode field 70, and a user profile (not shown) which does not have such a Pager Mode field.

The NSS 36 is arranged to respond to an incoming call having the above mentioned predetermined destination address by retrieving the message content of that incoming call. Upon recognising the retrieved message as the above mentioned unique code representative of the Pager Only mode, the NSS 36 accesses the user profiles in accordance with a source telephone number retrieved from the incoming call, finds the corresponding user profile and changes the flag in its Pager Mode field 70 from its reset state to its set state.

The NSS 36 is arranged to respond to an originating call from a caller, also referred to herein as a calling user, using a mobile telephone 10 or 40 to access the user profile 68 associated with the called number, and ascertain the state of the flag in the Pager Mode field 70.

If the state of the flag in the Pager Mode field 70 is the "set" state, the NSS 36 sends an announcement selection signal to the Voicemail system 62 for generating by the IVR 64 the selected announcement, "The number you have called is in Pager Mode. You may speak a short message or key a text message.". Instead of referring to Pager Mode, the expression Receive Only Mode, or some such equivalent could be used.

If the caller speaks a message, this is received by the IVR 64 and passed to the speech to text converter 66 to be converted into the appropriate format to be sent to the called number as a short message system (SMS) message. Alternatively, the caller may enter his mobile telephone's menu, and select the Write Messages function from the Messages Function, and use his keypad to create a text message. When he has finished creating the text message, he sends the message by selecting Options, and then Send. In a variant, the caller's mobile telephone is arranged to respond to menu selection command messages from the network to enter the commanded menu function, and the network management applications include an application which identifies a menu function as the next most likely function to be required by the caller having regard to the history of that call.

The NSS 36 receives either the text message output from the speech to text converter 66, or the text message sent by the caller, and generates an SMS message and sends that to the called number.

In variants, the user preferences part of a profile contains a section 72 specifying how the user wants the network to handle calls in the event that the Pager Mode flag is in its set state. In the simplest situation the user can elect to be sent SMS messages as described above, by setting a flag in a send SMS message field 72-1. In another situation, the user can elect to have calls diverted to the Voicemail system 62 by setting a flag in a Divert to Voicemail field 72-2, and this might be made an option offered to the caller and selectable by voice input or key press. In yet another situation, the user can enter his e-mail address in a Send E-mail field 72-3, and/or his fax address in a Send Fax field 72-4, these addresses constituting other service destination addresses of the present invention. Now when the network responds to the call by referring to the user's profile, it will find that there are entries in these fields and will generate a respective message inviting the caller to select one or more of the optional destinations for his message, and indicate which keys the caller has to press to select the various destination addresses. As an example, the caller can select the voicemail by pressing key #1, the e-mail address by pressing key #2, and the fax address by pressing key #3, and then speak a short message, which the network will recognise as a speech content signal from the caller's telephone and deliver to the IVR 64. The text output from the IVR 64 is then connected to the SMS messaging system, and sent to whichever network address(es) the caller selected.

In an alternative embodiment, the mobile telephone 10 does not include the FET, and the control unit 16 does not generate the disabling control signal nor the audio warning signal. Instead, when the mobile telephone 10 sends the Pager Only signal, the network generates a short call to the user's mobile telephone 10. Thus, the user's mobile telephone 10 gives a brief call alert signal, which serves as an audio warning signal. The network also sends an SMS message containing the text "pager", so that this text becomes displayed, and it is not necessary for the control unit 16 to have this text stored in a memory location, and to retrieve it for display.

In this alternative embodiment, when the caller makes a call, the user's profile is accessed and if the Pager Mode flag is found to be in its set state, the network responds by not permitting any voice call to be connected to that mobile telephone 10. In a variation of this alternative embodiment, the user provides certain numbers, e.g. home number, son's number, which the network stores in respective Permitted Connection fields 72-4, 72-5 of his profile, and now when a caller makes a call to the called user, the network accesses the called user's profile and if the caller's CLI matches any of these provided numbers, then that call is permitted to be connected through to the called user, and at the same time the network is commanded to send an announcement to the caller to inform him that the called telephone is currently in Pager Mode. In this way, the caller knows that the battery of the called telephone might well be in a low charge state and he can thus avoid unnecessary conversation. Similarly, the called user will know from the fact that he has received a voice call whilst his telephone is in Pager Mode that the caller has been made aware his Pager Mode, and, again, unnecessary conversation can be avoided because the called user does have to waste time warning the caller about the Pager Mode condition.

Unless the context clearly requires otherwise, throughout the description and the claims, the words "comprise", "comprising" and the like are to be construed in an inclusive as opposed to an exclusive or exhaustive sense; that is to say, in the sense of "including, but not limited to".

## Claims

1. A method of operating a communications network having a user profile store, the method comprising the steps of:
retrieving a dialled destination number from signalling data of a call from a calling user to a called user;
accessing the user profile store in accordance with that retrieved dialled destination number to find a corresponding user profile;
ascertaining whether a delivery mode field of a user profile so found contains an indication corresponding to receive only mode; and if so
sending to the calling user an indication that the called user is currently in receive only mode.

2. A method as claimed in claim 1, including the further steps of retrieving a calling line identity from the signalling data, ascertaining whether the retrieved calling line identity matches an entry in a permitted connections field of the called user's user profile, and if there is a matching entry proceeding with the call, else not proceeding with the call.

3. A method as claimed in claim 1, including the step of responding to receipt of message data from that calling user by sending a text form message to the called user.

4. A method as claimed in claim 3, wherein the received message data is in the form of a spoken message, and including the step of converting the received message data into text form.

5. A method as claimed in claim 3, wherein the received message data is already in text form.

6. A method as claimed in any one of claims 3 to 5, including the step of ascertaining whether the called user's profile contains at least one other service destination address, and if so sending to the calling user an invitation for the calling user to select one or more of said at least one other service destination address for additional delivery of said text form message.

7. A method as claimed in any one of 1 to 6, and including the further step of also sending to the calling user a command for causing a telephone associated with the calling user to enter a mode for writing messages.

8. A telephone comprising control means arranged to respond to a predetermined condition by transmitting via a transmit function of the telephone a message having a predetermined destination address and a predetermined message content.

9. A telephone as claimed in claim 8, wherein said predetermined condition is a user provided command.

10. A telephone as claimed in claim 9, wherein the user provided command is selected from a menu.

11. A telephone as claimed in any one of claims 8 to 10, being battery powered, and having battery voltage sensing means arranged to generate a predetermined output when the battery voltage falls to a predetermined level, and wherein the generation of said predetermined output constitutes said predetermined condition.

12. A telephone as claimed in any one of claims 8 to 11, wherein said control means is further arranged to provide an audio output upon activation of the disabling means.

13. A telephone as claimed in any one of claims 8 to 12, wherein said control means is further arranged to provide a predetermined display on a screen of the telephone indicative of the predetermined condition.

14. A telephone as claimed in any one of claims 8 to 13, wherein said control means is further arranged to activate, upon completion of that transmission, means for selectively disabling the transmit function.

15. A telephone as claimed in claim 14, wherein said control means is further arranged to override said means for selectively disabling the transmit function for the purpose of allowing transmission of responses to interrogation signals from a communications network.

16. A communications network having a user profile store, and arranged:
to retrieve a dialled destination number from signalling data of a call from a calling user to a called user;
to access the user profile store in accordance with that retrieved dialled destination number to find a corresponding user profile;
to ascertain whether a delivery mode field of a user profile so found contains an indication corresponding to receive only mode; and if so
to send to the calling user an indication that the called user is currently in receive only mode.

17. A communications network as claimed in claim 16, and arranged to retrieve a calling line identity from the signalling data, to ascertain whether the retrieved calling line identity matches an entry in a permitted connections field of the called user's user profile, and if there is a matching entry to proceed with the call, else not to proceed with the call.

18. A communications network as claimed in claim 16, and arranged to respond to receipt of message data from that calling user by sending a text form message to the called user.

19. A communications network as claimed in claim 18, and arranged to respond to receipt of said message data in the form of a spoken message, and to convert the spoken message into text form.

20. A communications network as claimed in either claim 18 or claim 19, and arranged to ascertain whether the called user's profile contains at least one other service destination address, and if so to send to the calling user an invitation for the calling user to select one or more of said at least one other service destination address for additional delivery of said text form message.

21. A communications network as claimed in any one of 16 to 20, and arranged to send to the calling user a command for causing a telephone associated with the calling user to enter a mode for writing messages.

22. A communications network as claimed in claim 1, and substantially as herein described with reference to Figure 2 of the drawings.

23. A telephone as claimed in claim 8, and substantially as herein described with reference to Figure 1 of the drawings.

24. A communications network as claimed in claim 16, and substantially as herein described with reference to Figure 1 of the drawings.
